# EUROPÄISCHE PATENTSCHRIFT

(11) **EP 3 831 630 B1**
(45) Veröffentlichungstag und Bekanntmachung des Hinweises auf die Patenterteilung: **11.01.2023**
(21) Anmeldenummer: 20205886.3
(22) Anmeldetag: 05.11.2020
(51) Int. Cl.: B60K 1/00, B60K 11/02

(54) **ELEKTRISCHE ACHSE**
ELECTRIC AXLE
ESSIEU ÉLECTRIQUE

(30) Priorität: 05.12.2019 DE 102019218955
(43) Veröffentlichungstag der Anmeldung: 09.06.2021
(73) Patentinhaber: Robert Bosch GmbH, 70442 Stuttgart (DE)
(72) Erfinder: Zweigle, Peter, 71254 Ditzingen (DE)

(56) Entgegenhaltungen:
- DE-A1-102016 215 188
- DE-A1-102017 103 413
- DE-A1-102018 202 067

## Beschreibung

Die Erfindung betrifft eine elektrische Achse (E-Achse) für Fahrzeuge, insbesondere für Kraftfahrzeuge.

### Stand der Technik

In der EP 1630 930 A2 ist eine elektrische Maschine offenbart, deren Stator wenigstens eine Leitung aufweist, die ausgestaltet ist, ein Kühlmedium zu enthalten. Die elektrische Maschine und ein Kühlsystem umfassend einen Wärmetauscher, einen Ventilator und eine Kühlmittelquelle sind miteinander über zwei Leitungen verbunden. Die Leitungen sind an entsprechenden Anschlüssen angeschlossen.

DE 10 2016 215188 A1 offenbart eine Leistungselektronik für ein Kraftfahrzeug mit einem elektrischen Anschluss, der mit einem elektrischen Gegenanschluss einer elektrischen Maschine elektrisch leitend verbindbar ist und wenigstens einen Kühlmittelanschluss, der mit einem Gegenkühlmittelanschluss einer Fahrzeugkomponenten fluidisch verbindbar ist.

### Offenbarung der Erfindung

Die Erfindung schafft eine elektrische Achse (E-Achse) für Fahrzeuge mit den Merkmalen des unabhängigen Anspruchs 1.

### Vorteile der Erfindung

Die vorliegende Erfindung schafft Möglichkeiten die Ausmaße der E-Achse an den verfügbaren Bauraum in unterschiedlichen Fahrzeugen bzw. an unterschiedlichen Stellen in einem Fahrzeug, beispielsweise in einem Motorraum und unter einer Rücksitzbank des Kraftfahrzeugs, anzupassen. Dabei können die gleichen Bauteile einer erfindungsgemäßen E-Achse ohne Austausch irgendwelcher Bauteile oder Komponenten und ohne zusätzliche Bearbeitungsschritte je nach verfügbarem Bauraum so zusammengebaut werden, dass die E-Achse die geeigneten Ausmaße für den jeweils verfügbaren Bauraum des Fahrzeugs aufweist.

Gemäß einem ersten Aspekt der Erfindung umfasst ein elektrische Achse (E-Achse) für Fahrzeuge ein Getriebe, eine elektrische Maschine, insbesondere einen Elektromotor, und eine Leistungselektronik. Die elektrische Maschine ist ausgebildet, das Getriebe anzutreiben, und weist einen ersten maschinenseitigen Kühlmittelanschluss und einen zweiten maschinenseitigen Kühlmittelanschluss auf. Die Leistungselektronik ist ausgebildet, die elektrische Maschine anzusteuern, und weist einen elektronikseitige Kühlmittelzulauf, an dem ein fahrzeugseitiger Kühlmittelkreislauf fluidleitend anschließbar ist, und einen elektronikseitigen Kühlmittelablauf auf. Die Leistungselektronik ist an einer Stirnseite der elektrischen Maschine entweder in einer ersten Ausrichtung oder in einer zweiten Ausrichtung angeordnet. In der ersten Ausrichtung ist der elektronikseitige Kühlmittelablauf mit dem ersten maschinenseitigen Kühlmittelanschluss fluidleitend verbunden und an dem zweiten maschinenseitigen Kühlmittelanschluss ist der fahrzeugseitige Kühlmittelkreislauf fluidleitend anschließbar. In der zweiten Ausrichtung ist der elektronikseitige Kühlmittelablauf mit dem zweiten maschinenseitigen Kühlmittelanschluss fluidleitend verbunden und an dem ersten maschinenseitigen Kühlmittelanschluss ist der fahrzeugseitige Kühlmittelkreislauf fluidleitend anschließbar.

Gemäß einem zweiten Aspekt der Erfindung umfasst ein Fahrzeug wenigstens eine E-Achse gemäß einem der vorherigen Ansprüche und einen fahrzeugseitigen Kühlmittelkreislauf. Der fahrzeugseitige Kühlmittelkreislauf ist an den elektronikseitigen Kühlmittelzulauf der Leistungselektronik der E-Achse fluidleitend angeschlossen. Wenn die Leistungselektronik an der Stirnseite der elektrischen Maschine in der ersten Ausrichtung angeordnet ist, ist an dem zweiten maschinenseitigen Kühlmittelanschluss der fahrzeugseitige Kühlmittelkreislauf fluidleitend angeschlossen. Wenn die Leistungselektronik an der Stirnseite der elektrischen Maschine in der zweiten Ausrichtung angeordnet ist, ist an dem ersten maschinenseitigen Kühlmittelanschluss der fahrzeugseitige Kühlmittelkreislauf fluidleitend angeschlossen.

Im Zusammenhang mit der Erfindung wird der Begriff mechanisch verbunden/gelagert so verstanden, dass die mechanisch verbundenen Elemente durch Formschluss und/oder Kraftschluss und/oder Stoffschluss miteinander verbunden sind.

Ferner wird der Begriff fest (mechanisch) verbunden/gelagert so verstanden, dass die fest verbundenen Elemente sich nicht relativ zueinander bewegen können. Alle drei translatorischen und alle drei rotatorischen Freiheitsgrade sind demnach blockiert. Insbesondere kann fest (mechanisch) verbunden auch eine einstückige bzw. integrale Ausführung bezeichnen.

Der Begriff drehfest (mechanisch) verbunden/gelagert wird so verstanden, dass die drehfest verbundenen Elemente sich zumindest um eine Achse nicht relativ zueinander drehen können. Wenigstens ein rotatorischer Freiheitsgrad ist demnach blockiert. Bevorzugt sind alle rotatorischen Freiheitsgrade blockiert und besonders bevorzugt sind zwei translatorische Freiheitsgrade und alle rotatorischen Freiheitsgrade blockiert. Insbesondere kann drehfest verbunden auch fest verbunden bedeuten.

Außerdem wird der Begriff fluidleitend verbunden/angeschlossen so verstanden, dass die fluidleitend verbundenen Elemente ein gasförmiges und/oder flüssiges Fluid zwischen einander ohne nennenswerte Volumenverluste bzw. dicht leiten können. Dabei können die fluidleidend verbundenen Elemente direkt aneinander angeschlossen oder über eine geeignete Fluidleitung (z. B. Rohr, Kanal, Schlauch usw.) verbunden sein.

Das Getriebe der E-Achse kann ein Getriebegehäuse, in dem die übrigen Komponenten des Getriebes angeordnet und/oder gelagert sind, aufweisen und ein Übersetzungsgetriebe, insbesondere ein Planetengetriebe und dergleichen umfassen. Die elektrische Maschine kann ein Maschinengehäuse, in dem die übrigen Komponenten der elektrischen Maschine angeordnet und/oder gelagert sind, aufweisen und insbesondere ein Elektromotor sein. Das Getriebegehäuse kann fest mechanisch mit dem Maschinengehäuse verbunden sein. Eine Maschinenwelle der elektrischen Maschine kann mit einem Rotor der elektrischen Maschine drehfest mechanisch verbunden sein. Dabei kann die elektrische Maschine das Getriebe über die Maschinenwelle an einem Getriebeeingang antreiben und insbesondere ein Drehmoment an das Getriebe abgeben.

Die Leistungselektronik kann ein Elektronikgehäuse, in dem die übrigen Komponenten der Leistungselektronik angeordnet und/oder gelagert sind, aufweisen. Die elektrische Maschine wird von der Leistungselektronik mit elektrischer Energie bzw. elektrischer Leistung versorgt, die aus einer elektrischen Energiequelle des Fahrzeugs (z. B. Akkumulator, Lichtmaschine usw.) bereitgestellt wird.

Die Leistungselektronik umfasst ein Elektronikkühlsystem, insbesondere Elektronikkühlmittelkanäle, in dem/denen ein Kühlmittel (z. B. Kühlwasser) strömen und Wärme von den Komponenten der Leistungselektronik aufnehmen kann. Die elektrische Maschine umfasst ein Maschinenkühlsystem, insbesondere Maschinenkühlmittelkanäle, in dem/denen ein Kühlmittel strömen und Wärme von den Komponenten der elektrischen Maschine aufnehmen kann.

Der Kühlmittelkreislauf des Fahrzeugs umfasst ein Kühlmittelreservoir, in dem Kühlmittel, insbesondere Kühlwasser, bevorratet wird und wenigstens einen Kühler, der das Kühlmittel vor, in und/oder nach dem Kühlmittelreservoir abkühlt, also Wärme aus dem Kühlmittel aufnimmt. Der Kühlmittelkreislauf ist derart mit dem elektronikseitigen Kühlmittelzulauf fluidleitend verbunden, dass Kühlmittel von dem Kühlmittelreservoir aus, optional über den wenigstens einen Kühler, zu der Leistungselektronik strömen kann, um Wärme von der Leistungselektronik aufzunehmen.

Das Elektronikgehäuse kann an der Stirnseite der elektrischen Maschine fest mechanisch mit dem Maschinengehäuse verbunden sein. In der ersten Ausrichtung kann die Leistungselektronik/das Elektronikgehäuse unter einem anderen Winkel und/oder mit einem anderen translatorischen Versatz an der Stirnseite der elektrischen Maschine angebracht sein, als in der zweiten Ausrichtung.

Der erste maschinenseitige Kühlmittelanschluss und der zweite maschinenseitige Kühlmittelanschluss sind entsprechend an der elektrischen Maschine angeordnet, sodass je nach Ausrichtung einer der beiden mit dem elektronikseitigen Kühlmittelablauf und der andere der beiden mit dem fahrzeugseitigen Kühlmittelkreislauf fluidleitend verbunden bzw. verbindbar ist.

In der ersten Ausrichtung ist der elektronikseitige Kühlmittelablauf mit dem ersten maschinenseitigen Kühlmittelanschluss fluidleitend verbunden, sodass das Kühlmittel, nachdem es das Elektronikkühlsystem von dem elektronikseitigen Kühlmittelzulauf zu dem elektronikseitigen Kühlmittelablauf durchströmt hat, von dem elektronikseitigen Kühlmittelablauf in den ersten maschinenseitigen Kühlmittelanschluss einströmen kann. Das Kühlmittel kann dann von dem ersten maschinenseitigen Kühlmittelanschluss aus das Maschinenkühlsystem bis zum zweiten maschinenseitigen Kühlmittelanschluss durchströmen. An dem zweiten maschinenseitigen Kühlmittelanschluss ist der Kühlmittelkreislauf derart fluidleitend angeschlossen, dass das Kühlmittel aus der elektrischen Maschine, optional über den wenigstens einen Kühler, zurück zu dem Kühlmittelreservoir strömen kann.

In der zweiten Ausrichtung ist der elektronikseitige Kühlmittelablauf mit dem zweiten maschinenseitigen Kühlmittelanschluss fluidleitend verbunden, sodass das Kühlmittel, nachdem es das Elektronikkühlsystem von dem elektronikseitigen Kühlmittelzulauf zu dem elektronikseitigen Kühlmittelablauf durchströmt hat, von dem elektronikseitigen Kühlmittelablauf in den zweiten maschinenseitigen Kühlmittelanschluss einströmen kann. Das Kühlmittel kann dann von dem zweiten maschinenseitigen Kühlmittelanschluss aus das Maschinenkühlsystem bis zum ersten maschinenseitigen Kühlmittelanschluss, also in umgekehrter Richtung wie in der ersten Ausrichtung, durchströmen. An dem ersten maschinenseitigen Kühlmittelanschluss ist der Kühlmittelkreislauf derart fluidleitend angeschlossen, dass das Kühlmittel aus der elektrischen Maschine, optional über den wenigstens einen Kühler, zurück zu dem Kühlmittelreservoir strömen kann.

Insbesondere wenn das Elektronikgehäuse mit dem Maschinengehäuse an dessen Stirnseite fest mechanisch verbunden ist, wird beim Verbinden des Elektronikgehäuses mit dem Maschinengehäuse entweder der erste maschinenseitige Kühlmittelanschluss oder der zweite maschinenseitige Kühlmittelanschluss auf den elektronikseitigen Kühlmittelablauf in Fügerichtung gepresst, sodass eine dichte fluidleitende Verbindung entsteht.

Somit kann die Leistungselektronik entweder in der ersten Ausrichtung oder in der zweiten Ausrichtung an der elektrischen Maschine angeordnet werden, wobei gleichzeitig eine fluidleitende Verbindung zwischen der Leitungselektronik und der elektrischen Maschine hergestellt wird. Demnach können mit derselben Leistungselektronik und derselben elektrischen Maschine bzw. mit demselben Elektronikgehäuse und demselben Maschinengehäuse zwei Bauformen der E-Achse, nämlich die erste Ausrichtung oder die zweite Ausrichtung der Leistungselektronik an der elektrischen Maschine realisiert werden. Dies reduziert enorm die nötige Anzahl an unterschiedlichen Komponenten für die beiden Bauformen der E-Achse.

In einer vorteilhaften Ausführungsform sind der erste maschinenseitige Kühlmittelanschluss und der zweite maschinenseitige Kühlmittelanschluss an der Stirnseite der elektrischen Maschine entlang einer Kreisbahn um einen Ausrichtungsmittelpunkt angeordnet.

Die beiden Ausführungsformen können sich darin unterscheiden, dass die Leistungselektronik bzw. das Elektronikgehäuse um einen bestimmten Winkel verdreht an der elektrischen Maschine bzw. dem Maschinengehäuse angeordnet ist. Dabei kann die Leistungselektronik/das Elektronikgehäuse einen Drehpunkt auf einer Längsfläche aufweisen, um den die Leistungselektronik/das Elektronikgehäuse zischen der ersten Ausrichtung und der zweiten Ausrichtung verdreht wird. Ebenso kann die elektrische Maschine/ das Maschinengehäuse an der Stirnseite der elektrischen Maschine einen korrespondierenden Drehpunktaufweisen, der mit dem Drehpunkt der Leistungselektronik/des Elektronikgehäuses auf einer gemeinsamen Drehachse liegt. Die gemeinsame Drehachse verläuft dabei senkrecht zu der Stirnseite der elektrischen Maschine und durch den Ausrichtungsmittelpunkt. Bevorzugt kann der Ausrichtungsmittelpunkt mit dem Drehpunkt der Leistungselektronik/des Elektronikgehäuses und/oder mit dem Drehpunkt der elektrischen Maschine/der Maschinengehäuses zusammenfallen.

Dabei ist der erste maschinenseitige Kühlmittelanschluss, insbesondere ein Mittelpunkt eines kreisrunden ersten maschinenseitigen Kühlmittelanschlusses, ebenso wie der zweite maschinenseitige Kühlmittelanschluss, insbesondere ein Mittelpunkt eines kreisrunden zweiten Maschinenseitigen Kühlmittelanschlusses, auf der gemeinsamen Kreisbahn um den Ausrichtungsmittelpunkt angeordnet. Es besteht dabei kein translatorischer Versatz zwischen der ersten Ausrichtung und der zweiten Ausrichtung.

Somit kann die Leistungselektronik an der Stirnseite der elektrischen Maschine unter zwei verschiedenen Winkeln angeordnet werden, ohne dabei zusätzliche oder verschieden ausgeformte Komponenten zu benötigen.

In einer vorteilhaften Ausführungsform ist die Leistungselektronik in der zweiten Ausrichtung um 90 ° [Grad] versetzt zu der ersten Ausrichtung an der Stirnseite der elektrischen Maschine angeordnet.

Dabei kann die Leistungselektronik zusätzlich auch um einen bestimmten translatorischen Versatz zwischen der ersten Ausrichtung und der zweiten Ausrichtung angeordnet sein.

Insbesondere bei einer/einem im Wesentlichen Scheibenförmig ausgestalteten Leistungselektronik/Elektronikgehäuse bieten um 90 ° verdrehte Ausrichtungen eine maximale Änderung der Ausdehnung der E-Achse in zueinander senkrechten Richtungen in der Ebene der Stirnfläche der elektrischen Maschine. Dadurch können zwei maximal unterschiedlich ausgedehnte Bauformen oder Konfigurationen der E-Achse mit denselben Komponenten realisiert werden.

In einer vorteilhaften Ausführungsform sind der erste maschinenseitige Kühlmittelanschluss und der zweite maschinenseitige Kühlmittelanschluss an der Stirnseite der elektrischen Maschine entlang der Kreisbahn um den Ausrichtungsmittelpunkt entsprechend der ersten Ausrichtung und der zweiten Ausrichtung der Leistungselektronik um 90° versetzt angeordnet.

Dabei ist der erste maschinenseitige Kühlmittelanschluss, insbesondere der Mittelpunkt des kreisrunden ersten maschinenseitigen Kühlmittelanschlusses, ebenso wie der zweite maschinenseitige Kühlmittelanschluss, insbesondere der Mittelpunkt des kreisrunden zweiten Maschinenseitigen Kühlmittelanschlusses, auf der gemeinsamen Kreisbahn um den Ausrichtungsmittelpunkt angeordnet. Es besteht dabei kein translatorischer Versatz zwischen der ersten Ausrichtung und der zweiten Ausrichtung.

Somit kann die Leistungselektronik an der Stirnseite der elektrischen Maschine unter zwei um 90 ° verschiedenen Winkeln angeordnet werden, ohne dabei zusätzliche oder verschieden ausgeformte Komponenten zu benötigen. Insbesondere bei der/dem im Wesentlichen Scheibenförmig ausgestalteten Leistungselektronik/Elektronikgehäuse bieten die um 90 ° verdrehten Ausrichtungen eine maximale Änderung der Ausdehnung der E-Achse in zueinander senkrechten Richtungen in der Ebene der Stirnfläche der elektrischen Maschine. Dadurch können zwei maximal unterschiedlich ausgedehnte Bauformen oder Konfigurationen der E-Achse mit denselben Komponenten realisiert werden.

In einer vorteilhaften Ausführungsform ist in der ersten Ausrichtung eine erste Abmessung H der E-Achse und in der zweiten Ausrichtung eine zweite Abmessung L der E-Achse minimal.

Insbesondere kann eine zu einer maximalen Abmessung der Leistungselektronik verschiedene zweitgrößte Abmessung in der ersten Ausrichtung maßgebend für die Abmessung H und in der zweiten Ausrichtung maßgebend für die Abmessung L sein. Wenn die Leistungselektronik bzw. das Elektronikgehäuse beispielsweise im Wesentlichen scheibenförmig ausgebildet ist und dabei eine maximale Abmessung I aufweist, die größer als eine dazu verschiedene Abmessung h ist, die wiederum größer als eine dazu und zu der maximalen Abmessung I senkrechte Abmessung b ist, dann ist in jeder der beiden Ausrichtungen die Abmessung h maßgeblich für die jeweilige Abmessung H oder L, sodass diese in der jeweiligen Ausrichtung minimal sind.

In einer vorteilhaften Ausführungsform ist die erste Abmessung H um 90° versetzt zu der zweiten Abmessung L.

In der ersten Ausrichtung kann eine zu der maximalen Abmessung der Leistungselektronik senkrechte zweitgrößte Abmessung maßgebend für die Abmessung H und die größte Abmessung der Leistungselektronik maßgebend für die Abmessung L sein. In der zweiten Ausrichtung kann die zweitgrößte Abmessung der Leistungselektronik maßgebend für die Abmessung L und die dazu senkrechte größte Abmessung der Leistungselektronik maßgebend für die Abmessung H sein. Wenn die Leistungselektronik bzw. das Elektronikgehäuse beispielsweise im Wesentlichen scheibenförmig ausgebildet ist und dabei die maximale Abmessung I aufweist, die größer als eine dazu senkrechte Abmessung h ist, die wiederum größer als die dazu und zu der maximalen Abmessung I senkrechte Abmessung b ist, dann sind in jeder der beiden Ausrichtungen die Abmessungen h und I maßgeblich für die Abmessung H und die Abmessung L.

### Kurze Beschreibung der Zeichnungen

Weitere Merkmale und Vorteile der vorliegenden Erfindung werden nachfolgend anhand der Figuren erläutert. Es zeigen:
- Fig. 1: schematische Gesamtdarstellungen einer Ausführungsform der elektrischen Achse (E-Achse);
- Fig. 2A: eine schematische Frontaldarstellung der Ausführungsform der E-Achse aus Fig. 1 mit der Leistungselektronik in der ersten Ausrichtung;
- Fig. 2B: eine schematische Frontaldarstellung der Ausführungsform der E-Achse aus Fig. 1 mit der Leistungselektronik in der zweiten Ausrichtung;
- Fig. 3: eine schematische Gesamtdarstellung einer Ausführungsform eines Fahrzeugs mit der E-Achse.

### Ausführungsformen der Erfindung

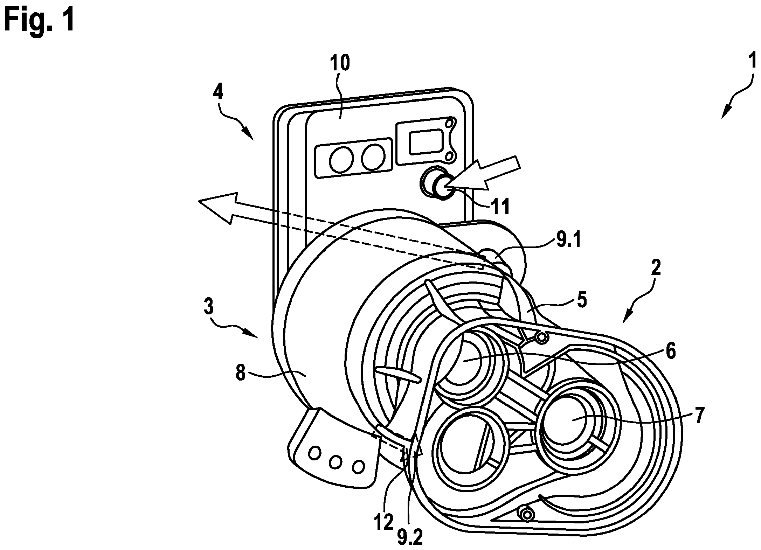

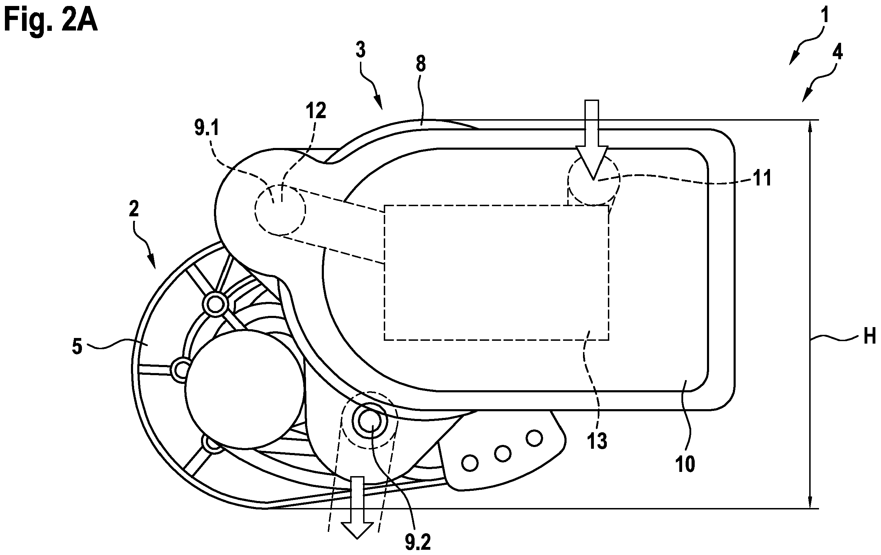

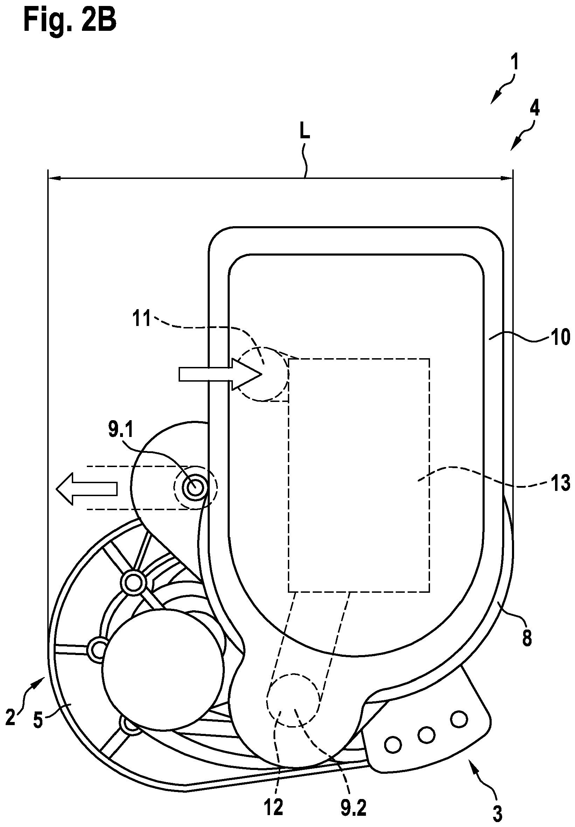

Figs. 1, 2A und 2B zeigen schematisch eine Ausführungsform der elektrischen Achse (E-Achse) 1. Wie in der schematischen Gesamtdarstellung der Ausführungsform der E-Achse 1 in Fig. 1 zu sehen, umfasst die E-Achse 1 ein Getriebe 2, eine elektrische Maschine 3, hier einen Elektromotor, und eine Leistungselektronik 4.

Das Getriebe 2 umfasst ein Getriebegehäuse 5, in dem die Komponenten des Getriebes 2 angeordnet und gelagert sind. Das Getriebe 2 ist über einen Getriebeeingang 6 mit der elektrischen Maschine 3 drehbar mechanisch verbunden. Ferner weist das Getriebe 2 einen Getriebeausgang 7 auf, an den eine Antriebsachse eines Fahrzeugs drehfest mechanisch anschließbar ist.

Die elektrische Maschine 3 umfasst ein Maschinengehäuse 8, in dem die Komponenten der elektrischen Maschine 3 angeordnet und gelagert sind. Insbesondere ist ein Stator (nicht dargestellt) fest und ein Rotor (nicht dargestellt) drehbar mechanisch in dem Maschinengehäuse 8 gelagert. Über eine Maschinenwelle (nicht dargestellt) ist der Rotor der elektrischen Maschine 3 über den Getriebeeingang 6 mit dem Getriebe 2 drehfest mechanisch verbunden. Über die Maschinenwelle kann die elektrische Maschine 3 das Getriebe 2 antreiben und insbesondere ein Drehmoment übertragen. Dabei ist das Maschinengehäuse 8 mit dem Getriebegehäuse 5 fest mechanisch verbunden.

Die elektrische Maschine 3 umfasst ferner einen ersten maschinenseitigen Kühlmittelanschluss 9.1 und einen zweiten maschinenseitigen Kühlmittelanschluss 9.2, die an dem Maschinengehäuse 8 ausgebildet sind. Die beiden maschinenseitigen Kühlmittelanschlüsse 9.1, 9.2 sind jeweils mit einem der beiden Enden eines Maschinenkühlsystems (nicht dargestellt) fluidleitend verbunden, das mehrere miteinander verbundene und sich entlang des Maschinengehäuses 8 erstreckende Maschinenkühlmittelkanälen (nicht dargestellt) umfasst. Über einen der beiden maschinenseitigen Kühlmittelkanäle 9.1, 9.2 kann Kühlmittel in das Maschinenkühlsystem einströmen. In dem Maschinenkühlsystem kann das Kühlmittel Wärme von den Komponenten der elektrischen Maschine 3, insbesondere von dem Stator aufnehmen und so die elektrische Maschine 3 kühlen. Über den anderen der beiden maschinenseitigen Kühlmittelkanäle 9.2, 9.1 kann das Kühlmittel aus dem Maschinenkühlsystem ausströmen.

Die Leistungselektronik 4 umfasst ein Elektronikgehäuse 10, in dem die Komponenten der Leistungselektronik 4 angeordnet sind. Das Elektronikgehäuse 10 ist an einer Stirnseite S der elektrischen Maschine 3 angeordnet und mit dem Maschinengehäuse 8 fest mechanisch verbunden. Das Elektronikgehäuse 10 ist im Wesentlichen scheibenförmig ausgebildet und weist eine maximale erste Abmessung I, eine dazu senkrechte zweite Abmessung h, die kleiner als die Abmessung I ist, sowie eine zu den Abmessungen I und h senkrechte Abmessung b, die kleiner als die Abmessung h ist, auf.

Ferner umfasst die Leistungselektronik 4 einen elektronikseitigen Kühlmittelzulauf 11, der an dem Elektronikgehäuse 10 ausgebildet ist und an den ein fahrzeugseitiger Kühlmittelkreislauf fluidleitend anschließbar ist. Zudem umfasst die Leistungselektronik 4 einen Kühlmittelablauf 12, der an dem Elektronikgehäuse 10 ausgebildet ist und der mit dem ersten maschinenseitigen Kühlmittelanschluss 9.1 oder dem zweiten maschinenseitigen Kühlmittelanschluss 9.2 fluidleitend verbunden ist. Der elektronikseitige Kühlmittelzulauf 11 ist mit einem der beiden Enden eines Elektronikkühlsystems 13 (siehe Figs. 2A und 2B) und der elektronikseitige Kühlmittelablauf 12 ist mit dem anderen der beiden Enden des Elektronikkühlsystems 13 fluidleitend verbunden. Das Elektronikkühlsystem 13 umfasst mehrere miteinander verbundene und sich entlang des Elektronikgehäuses 10 erstreckende Elektronikkühlmittelkanäle (nicht dargestellt) besteht. Über den elektronikseitigen Kühlmittelzulauf 11 kann Kühlmittel in das Elektronikkühlsystem 13 einströmen. In dem Elektronikkühlsystem 13 kann das Kühlmittel Wärme von den Komponenten der Leistungselektronik 4 aufnehmen und so die Leistungselektronik 4 kühlen. Über den elektronikseitigen Kühlmittelablauf 12 kann das Kühlmittel aus dem Elektronikkühlsystem 13 ausströmen.

Insbesondere kann (kühles) Kühlmittel von einem Kühlmittelreservoir eines Fahrzeugs optional über einen Kühler des Fahrzeugs durch den elektronikseitigen Kühlmittelzulauf 11 in das Elektronikkühlsystem 13 einströmen und durch den elektronikseitigen Kühlmittelablauf 12, der mit einem der beiden maschinenseitigen Kühlmittelanschlüsse 9.1, 9.2 fluidleitend verbunden ist, aus dem Elektronikkühlsystem ausströmen. Das Kühlmittel kann sodann über den einen der beiden maschinenseitigen Kühlmittelanschlüsse 9.1, 9.2 in das Maschinenkühlsystem einströmen und über den anderen der beiden maschinenseitigen Kühlmittelanschlüsse 9.2, 9.1 in das Kühlmittelreservoir des Fahrzeugs, optional über einen Kühler der Fahrzeugs, ausströmen.

Wie insbesondere den Figs. 2A und 2 B zu entnehmen ist, sind der erste maschinenseitige Kühlmittelanschluss 9.1 und der zweite maschinenseitige Kühlmittelanschluss 9.2 an der Stirnseite S der elektrischen Maschine 3 auf einer Kreisbahn K um einen gemeinsamen Ausrichtungsmittelpunkt M um 90 ° [Grad] zueinander versetzt angeordnet. Die beiden maschinenseitigen Kühlmittelanschlüsse 9.1, 9.2 haben einen kreisrunden Querschnitt, wobei jeweils der Mittelpunkt des kreisrunden Querschnitts der beiden maschinenseitigen Kühlmittelanschlüsse 9.1, 9.2 auf der Kreisbahn K liegt.

Eine erste Ausrichtung der Leistungselektronik 4 bzw. des Elektronikgehäuses 10 gegenüber der elektrischen Maschine 3 bzw. dem Maschinengehäuse 8 ist in der Fig. 2A schematisch dargestellt. Eine zweite Ausrichtung der Leistungselektronik 4 bzw. des Elektronikgehäuses 10 gegenüber der elektrischen Maschine 3 bzw. dem Maschinengehäuse 8 ist in der Fig. 2B schematisch dargestellt.

In der ersten Ausrichtung gemäß Fig. 2A ist die Leistungselektronik 4 derart an der Stirnseite S der elektrischen Maschine 3 angeordnet, dass der elektronikseitige Kühlmittelablauf 12 mit dem ersten maschinenseitigen Kühlmittelanschluss 9.1 fluidleitend verbunden ist. (Kaltes) Kühlmittel kann somit von dem fahrzeugseitigen Kühlmittelkreislauf über den elektronikseitigen Kühlmittelzulauf 11 in das Elektronikkühlsystem 13 einströmen und über den elektronikseitigen Kühlmittelablauf 12 ausströmen, um dann sogleich über den damit fluidleitend verbundenen ersten maschinenseitigen Kühlmittelanschluss 9.1 in das Maschinenkühlsystem einzuströmen und schließlich über den zweiten maschinenseitigen Kühlmittelanschluss 9.2 zurück in das fahrzeugseitige Kühlmittelsystem auszuströmen. Eine Abmessung H der E-Achse 1 entlang der Stirnfläche S der elektrischen Maschine 3 wird in der ersten Ausrichtung von der zweitgrößten Abmessung h der Leistungselektronik 4 maßgeblich bestimmt, während eine dazu senkrechte Abmessung L der E-Achse 1 entlang der Stirnfläche S der elektrischen Maschine 3 von der maximalen Abmessung I der Leistungselektronik 4 maßgeblich bestimmt wird.

In der zweiten Ausrichtung gemäß Fig. 2B ist die Leistungselektronik 4 derart an der Stirnseite S der elektrischen Maschine 3 angeordnet, dass der elektronikseitige Kühlmittelablauf 12 mit dem zweiten maschinenseitigen Kühlmittelanschluss 9.2 fluidleitend verbunden ist. (Kaltes) Kühlmittel kann somit von dem fahrzeugseitigen Kühlmittelkreislauf über den elektronikseitigen Kühlmittelzulauf 11 in das Elektronikkühlsystem 13 einströmen und über den elektronikseitigen Kühlmittelablauf 12 ausströmen, um dann sogleich über den damit fluidleitend verbundenen zweiten maschinenseitigen Kühlmittelanschluss 9.2 in das Maschinenkühlsystem einzuströmen und schließlich über den ersten maschinenseitigen Kühlmittelanschluss 9.1 zurück in das fahrzeugseitige Kühlmittelsystem auszuströmen. Die Abmessung L der E-Achse 1 entlang der Stirnfläche S der elektrischen Maschine 3 wird in der zweiten Ausrichtung von der zweitgrößten Abmessung h der Leistungselektronik 4 maßgeblich bestimmt, während die dazu senkrechte Abmessung H der E-Achse 1 entlang der Stirnfläche S der elektrischen Maschine 3 von der maximalen Abmessung I der Leistungselektronik 4 maßgeblich bestimmt wird.

Das Kühlmittel durchströmt die elektrische Maschine 3 bzw. das Maschinenkühlsystem je nach Ausrichtung der Leistungselektronik 4 an der elektrischen Maschine 3 in entgegengesetzter Richtung.

Die erste Ausrichtung der Leistungselektronik 4und die um 90 ° gedrehte zweite Ausrichtung der Leistungselektronik 4 können mit ein und derselben/demselben Leistungselektronik 4 bzw. Elektronikgehäuse 10 und ein und derselben/demselben elektrischen Maschine 3 bzw. Maschinengehäuse 8 realisiert werden. Dabei werden zwei Bauformen oder Konfigurationen der E-Achse umgesetzt, wobei in der ersten Konfiguration, in der die erste Ausrichtung vorliegt, die Abmessung H der E-Achse 1 minimal ist und in der zweiten Konfiguration, in der die zweite Ausrichtung vorliegt, die Abmessung L der E-Achse 1 minimal ist. Somit kann je nach verfügbarem Bauraum in einem Fahrzeug die passende Konfiguration der E-Achse1 ausgewählt werden. Beispielsweise kann die erste Konfiguration der E-Achse 1 für einen Bauraum unter einer Rücksitzbank und/oder einem Kofferraum eines Fahrzeugs eingesetzt werden, während die zweite Konfiguration der E-Achse 1 für einen Bauraum in einem Motorraum eines Fahrzeugs eingesetzt werden kann.

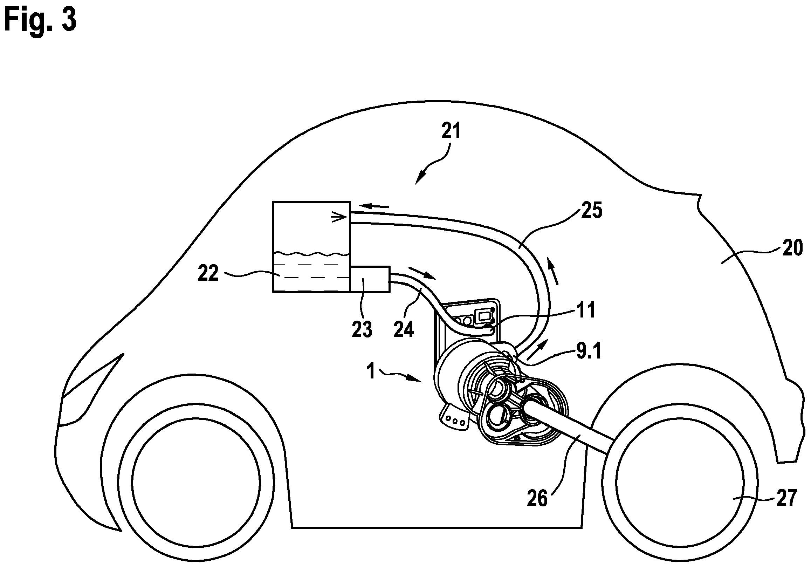

Fig. 3 zeigt eine schematische Gesamtdarstellung einer Ausführungsform eines Fahrzeugs 20, insbesondere eines Kraftfahrzeugs, mit der E-Achse 1 gemäß den Figs. 1, 2A und 2B. Das Fahrzeug 20 umfasst die E-Achse 1, einen Kühlmittelkreislauf 21 eine Antriebsachse 26 und wenigstens ein angetriebenes Rad 27.

Der Kühlmittelkreislauf 21 umfasst ein Kühlmittelreservoir 22 mit Kühlmittel wie beispielsweise Kühlwasser, einen Kühler 23 zum Entziehen von Wärme aus vorbeiströmendem Kühlmittel, eine zuführende Kühlmittelleitung 24 und eine abführende Kühlmittelleitung 25.

Die zuführende Kühlmittelleitung 24 ist an dem elektronikseitigen Kühlmittelzulauf 11 fluidleitend angeschlossen und die abführende Kühlmittelleitung 25 ist hier beispielhaft an dem ersten maschinenseitigen Kühlmittelanschluss 9.1 fluidleitend angeschlossen (somit ist hier beispielhaft die Leistungselektronik 4 in der zweiten Konfiguration an der elektrischen Maschine 3 angeordnet). Ebenso könnte die abführende Kühlmittelleitung 25 ist an dem zweiten maschinenseitigen Kühlmittelanschluss 9.2 fluidleitend angeschlossen sein (somit wäre die Leistungselektronik 4 in der ersten Konfiguration an der elektrischen Maschine 3 angeordnet). Kühlmittel kann von dem Kühlmittelreservoir 22 über den fluidleitend verbundenen Kühler 23, der dem vorbeiströmenden Kühlmittel Wärme entzieht, in den elektronikseitigen Kühlmittelzulauf 11 einströmen. Das Kühlmittel kann dann das Elektronikkühlsystem 13 durchströmen und der Leistungselektronik 4 Wärme entziehen. Über den elektronikseitigen Kühlmittelablauf 12 der hier in der zweiten Ausrichtung angeordneten Leistungselektronik 4 strömt das Kühlmittel aus dem Elektronikkühlsystem 13 aus und hier sogleich über den fluidleitend verbundenen zweiten maschinenseitigen Kühlmittelanschluss 9.2 in das Maschinenkühlsystem ein. In dem Maschinenkühlsystem entzieht das Kühlmittel der elektrischen Maschine 3 Wärme und strömt sodann über den ersten maschinenseitigen Kühlmittelanschluss 9.1 in die fluidleitend angeschlossene abführende Kühlmittelleitung 25 und über diese zurück in das Kühlmittelreservoir 22.

In der ersten Ausrichtung der Leistungselektronik 4 wäre der elektronikseitige Kühlmittelablauf 12 mit dem ersten maschinenseitigen Kühlmittelanschluss 9.1 und der zweite maschinenseitige Kühlmittelanschluss 9.2 wäre mit der abführenden Kühlmittelleitung 25 fluidleitend verbunden. Somit würde das Kühlmittel das Maschinenkühlsystem in umgekehrter Richtung durchströmen. Damit bewirkt auch das hier beschriebene Fahrzeug 20 die oben erläuterten Vorteile.

Der Umfang des Schutzes wird nur durch den Gegenstand der beigefügten Ansprüche definiert (und begrenzt).

Obwohl hier spezifische Ausführungsformen illustriert und beschrieben wurden, ist für den Fachmann ersichtlich, dass es eine Vielzahl von Alternativen und/oder gleichwertigen Implementierungen gibt. Es ist zu würdigen, dass die exemplarischen Ausgestaltungen oder Ausführungsformen nur Beispiele sind und nicht dazu gedacht sind, den Umfang (den nur durch den Gegenstand der beigefügten Ansprüche definiert wird), die Anwendbarkeit oder die Konfiguration in irgendeiner Weise einzuschränken. Vielmehr wird die vorstehende Zusammenfassung und detaillierte Beschreibung dem Fachmann hinreichende Anweisungen für die Umsetzung von mindestens einer bevorzugten Ausführungsform liefern, wobei es sich versteht, dass verschiedene Änderungen in der Funktion und Anordnung der Elemente, die in einer beispielhaften Ausgestaltung beschrieben werden, nicht von dem in den beigefügten Ansprüchen und ihren rechtlichen äquivalenten dargelegten Anwendungsbereich hinausführen. In der Regel ist diese Anmeldung dazu gedacht, alle Anpassungen oder Variationen der hier diskutierten spezifischen Ausführungsformen abzudecken.

In der vorstehenden ausführlichen Beschreibung wurden verschiedene Merkmale in einem oder mehreren Beispielen zusammengefasst, um die Offenbarung knapp zu halten. Es versteht sich, dass die obige Beschreibung illustrativ und nicht restriktiv sein soll. Sie soll alle Alternativen, Änderungen und äquivalente abdecken, die im Rahmen der Erfindung (wie in den beigefügten Ansprüchen definiert) enthalten sein können. Viele andere

Beispiele werden einem Fachmann bei dem Studium der obigen Offenbarung offensichtlich werden.

## Patentansprüche

1. Elektrische Achse (1), E-Achse, für Fahrzeuge, umfassend:
- ein Getriebe (2);
- eine elektrische Maschine (3), die ausgebildet ist, das Getriebe (2) anzutreiben, und einen ersten maschinenseitigen Kühlmittelanschluss (9.1) und einen zweiten maschinenseitigen Kühlmittelanschluss (9.2) aufweist; und
- eine Leistungselektronik (4), die ausgebildet ist, die elektrische Maschine (3) anzusteuern, und einen elektronikseitigen Kühlmittelzulauf (11), an dem ein fahrzeugseitiger Kühlmittelkreislauf (21) fluidleitend anschließbar ist, und einen elektronikseitigen Kühlmittelablauf (12) aufweist;
**dadurch gekennzeichnet, dass**
die Leistungselektronik (4) an einer Stirnseite (S) der elektrischen Maschine (3) entweder in einer ersten Ausrichtung oder in einer zweiten Ausrichtung angeordnet ist,
wobei in der ersten Ausrichtung der elektronikseitige Kühlmittelablauf (12) mit dem ersten maschinenseitigen Kühlmittelanschluss (9.1) fluidleitend verbunden ist und an den zweiten maschinenseitigen Kühlmittelanschluss (9.2) der fahrzeugseitige Kühlmittelkreislauf (21) fluidleitend anschließbar ist, und
wobei in der zweiten Ausrichtung der elektronikseitige Kühlmittelablauf (12) mit dem zweiten maschinenseitigen Kühlmittelanschluss (9.2) fluidleitend verbunden ist und an den ersten maschinenseitigen Kühlmittelanschluss (9.1) der fahrzeugseitige Kühlmittelkreislauf (21) fluidleitend anschließbar ist.

2. Elektrische Achse (1) gemäß Anspruch 1,
**dadurch gekennzeichnet, dass**
der erste maschinenseitige Kühlmittelanschluss (9.1) und der zweite maschinenseitige Kühlmittelanschluss (9.2) an der Stirnseite (S) der elektrischen Maschine (3) entlang einer Kreisbahn (K) um einen Ausrichtungsmittelpunkt (M) angeordnet sind.

3. Elektrische Achse (1) gemäß Anspruch 1 oder 2,
**dadurch gekennzeichnet, dass**
die Leistungselektronik (4) in der zweiten Ausrichtung um 90 ° [Grad] versetzt zu der ersten Ausrichtung an der Stirnseite (S) der elektrischen Maschine (3) angeordnet ist.

4. Elektrische Achse (1) gemäß Anspruch 3,
**dadurch gekennzeichnet, dass**
der erste maschinenseitige Kühlmittelanschluss (9.1) und der zweite maschinenseitige Kühlmittelanschluss (9.2) an der Stirnseite (S) der elektrischen Maschine (3) entlang der Kreisbahn (K) um den Ausrichtungsmittelpunkt (M) entsprechend der ersten Ausrichtung und der zweiten Ausrichtung der Leistungselektronik (4) um 90° versetzt angeordnet sind.

5. Elektrische Achse (1) gemäß einem der vorherigen Ansprüche,
**dadurch gekennzeichnet, dass**
in der ersten Ausrichtung eine erste Abmessung H der E-Achse (1) minimal ist, und
wobei in der zweiten Ausrichtung eine zweite Abmessung L der E-Achse (1) minimal ist.

6. Elektrische Achse (1) gemäß Anspruch 5,
**dadurch gekennzeichnet, dass**
die erste Abmessung H um 90° versetzt zu der zweiten Abmessung L ist.

## Claims

1. Electric axle (1), E-axle, for vehicles, comprising:
- a gear mechanism (2);
- an electric machine (3) which is designed to drive the gear mechanism (2) and has a first machine-side coolant connection (9.1) and a second machine-side coolant connection (9.2); and
- a power electronics system (4) which is designed to actuate the electric machine (3) and has an electronics system-side coolant inlet (11), to which a vehicle-side coolant circuit (21) can be connected in a fluid-conducting manner, and an electronics system-side coolant outlet (12);
**characterized in that**
the power electronics system (4) is arranged on an end side (S) of the electric machine (3) either in a first orientation or in a second orientation, wherein, in the first orientation, the electronics system-side coolant outlet (12) is connected in a fluid-conducting manner to the first machine-side coolant connection (9.1) and can be connected in a fluid-conducting manner to the second machine-side coolant connection (9.2) of the vehicle-side coolant circuit (21), and
wherein, in the second orientation, the electronics system-side coolant outlet (12) is connected in a fluid conducting manner to the second machine-side coolant connection (9.2) and can be connected in a fluid-conducting manner to the first machine-side coolant connection (9.1) of the vehicle-side coolant circuit (21) .

2. Electric axle (1) according to Claim 1,
**characterized in that**
the first machine-side coolant connection (9.1) and the second machine-side coolant connection (9.2) are arranged on the end side (S) of the electric machine (3) along a circular path (K) around an orientation centre point (M) .

3. Electric axle (1) according to Claim 1 or 2,
**characterized in that**
the power electronics system (4), in the second orientation, is arranged on the end side (S) of the electric machine (3) offset through 90° [degrees] in relation to the first orientation.

4. Electric axle (1) according to Claim 3,
**characterized in that**
the first machine-side coolant connection (9.1) and the second machine-side coolant connection (9.2) are arranged on the end side (S) of the electric machine (3) along the circular path (K) around the orientation centre point (M) in accordance with the first orientation and the second orientation of the power electronics system (4) offset through 90°.

5. Electric axle (1) according to one of the preceding claims,
**characterized in that**
the first dimension H of the E-axle (1) is at a minimum in the first orientation, and
wherein a second dimension L of the E-axle (1) is at a minimum in the second orientation.

6. Electric axle (1) according to Claim 5,
**characterized in that**
the first dimension H is offset through 90° in relation to the second dimension L.

## Revendications

1. Essieu électrique (1), « e-essieu », pour véhicules, comprenant :
une transmission (2) ;
une machine électrique (3) qui est réalisée pour entraîner la transmission (2), et présente un premier raccord de fluide de refroidissement (9.1) côté machine et un deuxième raccord de fluide de refroidissement (9.2) côté machine ; et
une électronique de puissance (4) qui est réalisée pour piloter la machine électrique (3), et présente une arrivée de fluide de refroidissement (11) côté électronique à laquelle un circuit de fluide de refroidissement (21) côté véhicule peut être raccordé en communication fluidique, et un écoulement de fluide de refroidissement (12) côté électronique ;
**caractérisé en ce que** l'électronique de puissance (4) est disposée sur une face frontale (S) de la machine électrique (3) soit dans une première orientation, soit dans une deuxième orientation,
dans lequel, dans la première orientation, l'écoulement de fluide de refroidissement (12) côté électronique est raccordé en communication fluidique au premier raccord de fluide de refroidissement (9.1) côté machine, et le circuit de fluide de refroidissement (21) côté véhicule peut être raccordé en communication fluidique au deuxième raccord de fluide de refroidissement (9.2) côté machine, et
dans lequel, dans la deuxième orientation, l'écoulement de fluide de refroidissement (12) côté électronique est raccordé en communication fluidique au deuxième raccord de fluide de refroidissement (9.2) côté machine, et le circuit de fluide de refroidissement (21) côté véhicule peut être raccordé en communication fluidique au premier raccord de fluide de refroidissement (9.1) côté machine.

2. Essieu électrique (1) selon la revendication 1, **caractérisé en ce que** le premier raccord de fluide de refroidissement (9.1) côté machine et le deuxième raccord de fluide de refroidissement (9.2) côté machine sont disposés sur la face frontale (S) de la machine électrique (3) le long d'une trajectoire circulaire (K) autour d'un centre de l'orientation (M).

3. Essieu électrique (1) selon la revendication 1 ou 2, **caractérisé en ce que** dans la deuxième orientation, l'électronique de puissance (4) est disposée avec un décalage de 90 ° [degrés] par rapport à la première orientation sur la face frontale (S) de la machine électrique (3).

4. Essieu électrique (1) selon la revendication 3, **caractérisé en ce que** le premier raccord de fluide de refroidissement (9.1) côté machine et le deuxième raccord de fluide de refroidissement (9.2) côté machine sont disposés avec un décalage de 90° sur la face frontale (S) de la machine électrique (3) le long de la trajectoire circulaire (K) autour du centre de l'orientation (M) selon la première orientation et la deuxième orientation de l'électronique de puissance (4) .

5. Essieu électrique (1) selon l'une quelconque des revendications précédentes, **caractérisé en ce que**
dans la première orientation, une première dimension H de l'essieu électrique (1) est minimale, et
dans lequel, dans la deuxième orientation, une deuxième dimension L de l'essieu électrique (1) est minimale.

6. Essieu électrique (1) selon la revendication 5, **caractérisé en ce que** la première dimension H est décalée de 90° par rapport à la deuxième dimension L.
